Europäisches Patentamt

European Patent Office

Office européen des brevets

(19)

(11)  EP 0 364 743 B1

(12)  EUROPEAN PATENT SPECIFICATION

(45)  Date of publication and mention
of the grant of the patent:
**28.05.1997  Bulletin 1997/22**

(51)  Int Cl.6: **G06F 15/78**, G06F 9/24

(21)  Application number: **89117257.9**

(22)  Date of filing: **18.09.1989**

(54)  **Development method of data processing system**

Entwicklungsverfahren für ein Datenverarbeitungssystem

Méthode de développement pour système de traitement de données

(84)  Designated Contracting States:
**DE FR GB IT**

(30)  Priority: **20.09.1988  JP  235919/88
20.09.1988  JP  235920/88**

(43)  Date of publication of application:
**25.04.1990  Bulletin 1990/17**

(73)  Proprietor: **HITACHI, LTD.
Chiyoda-ku, Tokyo 101 (JP)**

(72)  Inventors:
  • **Akao, Yasushi
    Kokubunji-shi Tokyo (JP)**
  • **Baba, Shiro
    Tokorozawa-shi Saitama (JP)**
  • **Sawase, Terumi
    Hannou-shi Saitama (JP)**
  • **Hagiwara, Yoshimune
    Hachioji-shi Tokyo (JP)**

(74)  Representative:
**Strehl Schübel-Hopf Groening & Partner
Maximilianstrasse 54
80538 München (DE)**

(56)  References cited:
**EP-A- 0 306 962**

  • **WESCON, vol. 27, 1983, pages 34/2 (1-4); L.L.
GOSS: "Single chip microcomputer with EEROM
allows flexible system design"**
  • **PATENT ABSTRACTS OF JAPAN, vol. 10, no. 53,
p-433, 4th March 1986; & JP-A-60 198 667**
  • **PATENT ABSTRACTS OF JAPAN, vol. 11, no.
151 (P-576)[2598], 16th May 1987; & JP- A-61 285
567 (MINOLTA)**
  • **ELECTRONIC DESIGN, 7th August 1986, pages
94-97, Scott McMorrow: "In-circuit logic device
can be reprogrammed on the fly"**

**Description**

The present invention relates to technology for flexibly dealing with specification of a data processing system such as a microcomputer system and a semiconductor integrated circuit for data processing and further with change of setting of function, and relates to a development method of a data processing system, a single chip microcomputer system, for example.

In a microcomputer system constituted on a wiring substrate and having a single chip microcomputer as a key component comprising a CPU (central processing unit) at the center and required peripheral circuits formed on one semiconductor substrate, in order to realize a hardware for data storage and data communication and further motor drive as well as display control corresponding to the control object, an exclusive LSI and further a programmable device such as a PAL (programmable array logic) or a PLD (programmable logic device), and a TTL circuit and the like are installed. When such a microcomputer application system is developed, in change of software program or correction of bug, a memory holding the program must be corrected. In a single chip microcomputer incorporating a memory being object of correction or change of such software program, constitution of converting the memory into EPROM and enabling its writing control based on signal control from the outside is disclosed in EP A1 0 159 548.

When a microcomputer application system with an external logic as hardware composed of the PAL, the PLD and further the TTL circuit and the like is constituted on the outside of the single chip microcomputer having the program memory converted into EPROM, if correction of the hardware becomes necessary attendant upon change of the operation specification or the function of the system at the midway of development, change of the program of the programmable device as the external logic and reconstruction of the LSI by change of a mask pattern in the case of a hardware constituted by a gate array and further change of wiring pattern in the wiring substitute become necessary, thereby a measure for the change of the operation specification and the function of the system at the midway of the development of the microcomputer application system is delayed.

On the other hand, while the microcomputer application systems become multifunctional and are further miniaturized in recent years, a data processing LSI such as a single chip microcomputer with various sorts of peripheral functions being on-chip is apt to be increasingly applied to such systems. Corresponding to this, the single chip microcomputer incorporates various sorts of peripheral functions which can be constituted as an external memory or an external logic, such as an interface circuit, a timer counter, an input/output control circuit, a ROM for storing the control program and further a subprocessor and the like, on one semiconductor substrate. However, since the peripheral function incorporated in such a single chip microcomputer particularly a logic functional portion in hardware is fixed conventioanally, although the program memory converted into EPROM can change the software program, in order to change the logic function in hardware, design change of the single chip microcomputer as a whole and the change of the mask pattern for the manufacturing must be performed, thereby existence of a problem has been made clear by the present inventors that a user of the single chip microcomputer for himself cannot set or change the operation specification or the function required in the logic functional portion in hardware. Further, when the microcomputer application system having such single chip microcomputer as the key component is constituted, at the midway of the development, even if partial change of the operation specification and the function of the system becomes necessary, the function of the single chip microcomputer cannot be dealt with flexibly and rapidly in response to the requirement. This problem also suppresses the multifunctional conversion of the single chip microcomputer.

A typical example for the above described prior art is also disclosed in WESCON, Vol. 27, 1983, pages 34/2 (1 to 4). The integrated semiconductor device described in this document includes a central processing unit and a non-volatile memory for data and program. The memory is electrically erasable and reprogrammable. The device includes also certain logic circuits. These are, however, hard wired and cannot be adapted to different applications without a change of the entire layout of the device.

A single chip microcomputer having a central processing unit as well as a sub-processor and a logic circuit which can operate independently of the central processing unit and are programmable from outside of the microcomputer is disclosed in EP-A2-0 306 962. This document is prior art under Art. 54(3) EPC. It does not disclose the method steps of programming, once only, each of a series of samples of the microcomputer during the development of a data processing system.

SUMMARY OF THE INVENTION

An object of the invention is to provide a development method of a data processing system wherein setting and change of the operation specification and the function for the data processing system can be dealt with flexibly and easily.

This object is solved by the method set forth in claim 1.

Aspects of preferred embodiments of the invention will be described as follows.

Development Method of Data Processing System

When a data processing system is constituted utilizing a semiconductor integrated circuit for data processing composed of a logic functional block which can realize a required logic function in response to the writing state for a non-volatile storage element capable of being written electrically and of a logic operation control block such as a CPU block which realizes the logic operation utilizing the logic functional block, both blocks being formed on one semiconductor substrate, required data is written to the non-volatile storage element included in the logic circuit block. Then in response to a change of the operation specification and the function of the data processing system, the step of replacing the changed function by a new semiconductor integrated circuit for data processing with the same structure and reflecting the new function by the storage information of the logic circuit block may be included. Otherwise, the step of writing a software program in response to a function required for the data processing system into the non-volatile memory block including a non-volatile storage element capable of being written electrically, or the step of replacing the changed function by a new semiconductor integrated circuit for data processing with the same structure and reflecting the new function by the storage information of the non-volatile memory block, may be included.

According to such a development method, when the data processing system constituted by the semiconductor integrated circuit for data processing as the key component including the logical function block or the non-volatile memory block capable of being written electrically is developed, in order to set or change the function of the semiconductor integrated circuit for data processing in response to the required specification of the system, the logic function in hardware of the logical function block and the information of the non-volatile memory block are programmed electrically to elements of these blocks so as to satisfy the required specification of the function, thereby the setting or change of the operation specification or the function required for the system can be dealt with flexibly and further easily.

Semiconductor Integrated Circuit for Data Processing

A semiconductor integrated circuit for data processing composed of a logical function block which can realize a required logic block function in response to the writing state for a non-volatile storage element capable of being written electrically, or a non-volatile memory block including a non-volatile storage element which can store a software program electrically, as well as of a logical operation control block such as a CPU whose operation is constituted by the software program or the like, both blocks being formed on one semiconductor substrate, is provided with the operation specification so that the non-volatile storage element of the logical function block and the non-volatile memory block can be written from the outside by a writing device such as a general EPROM writer.

Such operation specification may be, for example, that the semiconductor integrated circuit for data processing can appear in function similar to a non-volatile single memory such as an EPROM by way of a mode signal, i.e., that an external terminal to enable interface with a writing device such as a general EPROM writer can be provided. When such operation specification is adopted, using an adapter such as a socket adapter with simple constitution so as to exclusively change difference in the number of external terminals and the arrangement constitution between the semiconductor integrated circuit for data processing and the general writing device, both can be interfaced with each other.

Then the logical function block and the non-volatile memory block are connected commonly to an internal address bus and an internal data bus, or the writing device, and an access terminal of data or address to be interfaced therewith are made common between the logical function block and the non-volatile memory block and both are arranged in the same address space. Consequently when the logical function block or the non-volatile memory block is written from the outside by the writing device, special processing or circuit is not required for changing the address space, and by only changing the address signal, the information can be written by the writing device common to both the logical function block and the non-volatile block.

According to such a semiconductor integrated circuit for data processing, the operation specification that the non-volatile storage elements of the logical function block and the non-volatile memory block can be written from the outside by the writing device such as a general EPROM writer entirely obviates utilization of a special exclusive writing device in setting or changing the operation specification or the function of the semiconductor integrated circuit for data processing, and acts so that the general writing device such as an EPROM writer can be utilized for a single non-volatile memory such as an EPROM. Consequently, at the mass production of the semiconductor integrated circuit for data processing and further at the debug or development state of the system applying this, the use convenience of the semiconductor integrated circuit for data processing is improved in the point of setting of the logic function to the semiconductor integrated circuit for data processing, in other words, the writing processing to the non-volatile storage element included in the logical function block or the non-volatile memory block.

BRIEF DESCRIPTION OF THE DRAWINGS

FIG. 1 is a block diagram of an embodiment of a semiconductor integrated circuit for data processing according to the invention;

FIG. 2 is an appearance view of an example of a general writing device;

FIG. 3 is a flow chart of an embodiment illustrating procedure of a development method of a data processing system according to the invention;

FIG. 4 is a block diagram of an example of a printer controller system constituted by the procedure shown in FIG. 3;

FIG. 5 is a block diagram of a single chip microcomputer as an example that is useful to understand the invention;

FIG. 6 is a block diagram of another single chip microcomputer centering around constitution of a PLA as an example of a logical function block;

FIG. 7 is a circuit diagram of an example of an AND matrix in the PLA of FIG. 6;

FIG. 8 is a circuit diagram of an example of an OR matrix in the PLA of FIG. 6;

FIG. 9A through FIG. 9D are operation mode explanation diagrams paying attention to PLA and I/O in the single chip microcomputer shown in FIG.6;

FIG. 10 is a block diagram of a single chip microcomputer having a subprocessor as a logical function block in accordance with the present invention;

FIG. 11 is a block diagram illustrating an example of the subprocessor shown in FIG. 10;

FIG. 12 is a block diagram of an example-of a single chip microcomputer having a program memory converted into EPROM as an example of a non-volatile memory block;

FIG. 13 is a logic diagram of an example of a control signal generating circuit included in the single chip microcomputer of FIG. 12;

FIG. 14 is a detailed block diagram of an example of a logical function block;

FIG. 15 is an explanation diagram illustrating an example of address mapping state between a logical function block and a non-volatile memory block;

FIG. 16 (A) - (G) is a timing chart of an example illustrating timing required in test reading operation for data writing and verifying to the logical function block and the non-volatile memory block contained in the single chip microcomputer shown in FIG. 12;

FIG. 17 is an appearance perspective view of the whole body when writing/test reading of a single chip microcomputer is performed through an adapter by a general EPROM writer;

FIG. 18 is an explanation diagram of an example of a way the single chip microcomputer and the general EPROM writer are connected by the adapter;

FIG. 19 is an explanation diagram of another way the single chip microcomputer and the general EPROM writer are connected by the adapter; and

FIG. 20 is a block diagram of an example-of a single chip microcomputer adopting microprogram control.

## DESCRIPTION OF THE DRAWINGS

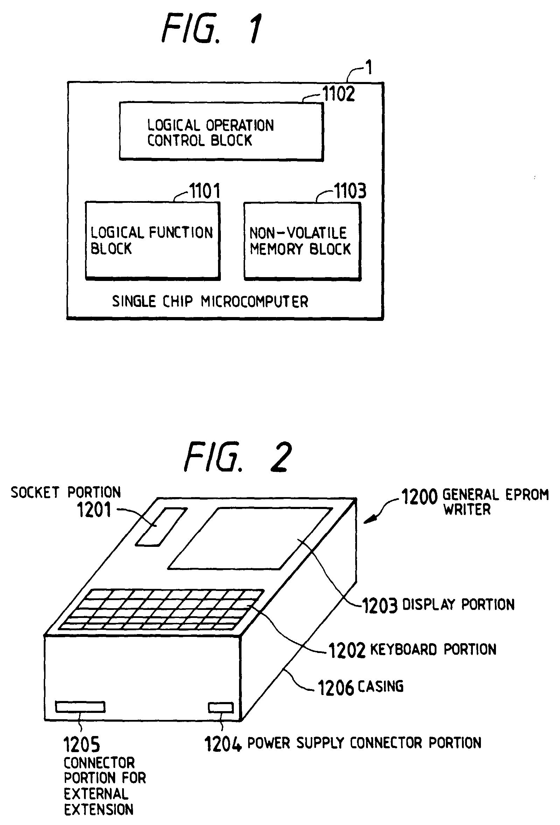

FIG. 1 shows a single chip microcomputer as an embodiment of a semiconductor integrated circuit for data processing according to the invention. The single chip microcomputer 1 shown in FIG. 1 is formed on one semiconductor substrate by known semiconductor manufacturing technology, and comprises at least a logical function block 1101 for realizing required logical function in response to the writing state for a non-volatile storage element capable of being written electrically, and a logical operation control block 1102 such as a CPU for executing the logical operation utilizing the logical function block 1101, and further, if necessary, a non-volatile memory block 1103 which can store an operation program or the like for the logical operation control block into the non-volatile storage element capable of being written electrically.

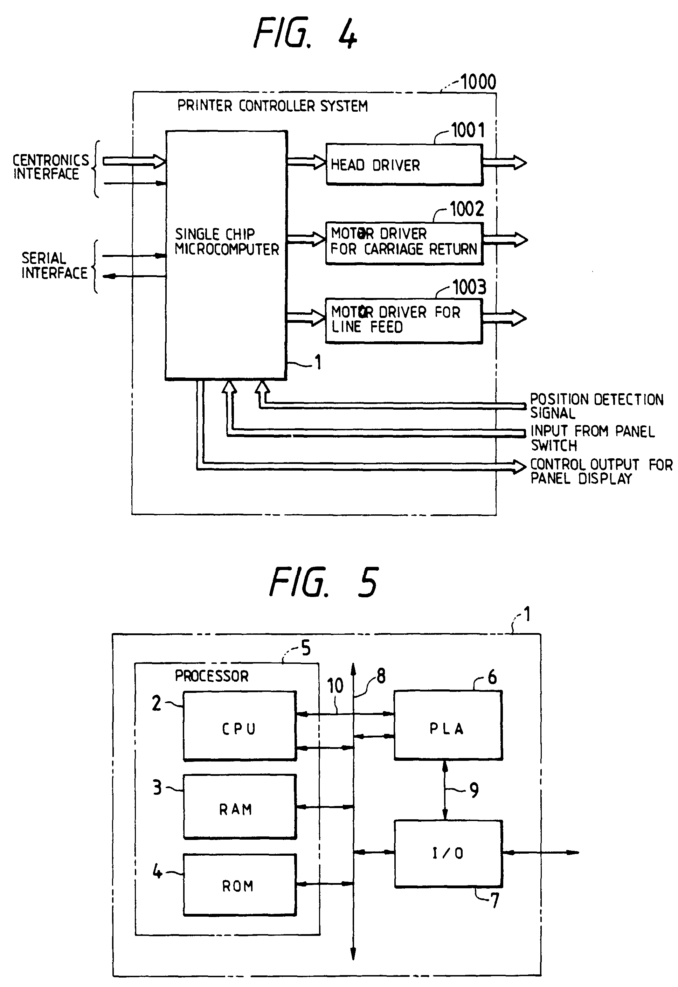

Such a single chip microcomputer 1 can be applied to various sorts of microcomputer application systems such as a printer controller system 1000 shown in FIG. 4. For example, the printer controller system 1000 shown in FIG. 4 controls a mechanical portion of the printer while interfacing with a host computer, and centers around the single chip microcomputer 1 and comprises a head driver 1001 for driving dots of a dot printer head for example in accordance with the printing data, a motor driver 1002 for carriage return for moving the printer head in the printing direction, and a motor driver 1003 for line feed for moving a medium such as a paper to be printed, all being installed on one board, for example, one printed board. The single chip microcomputer 1 receives the printing data from the host computer through a centronics interface or a serial interface, and controls the head driver 1001 in response to the printing data and performs printing to the medium. The motor driver 1002 for carriage return and the motor driver 1003 for line feed during the printing operation are driven and controlled based on output of a timer or the like included in the single chip microcomputer 1 and position detection signal detected by a mechanical portion of the printer and further input from a panel switch, and also displays and controls required information onto the panel of the printer if necessary. The printing data supplied to the head driver 1001 may be supplied through an LSI such as an interface adapter based on data or address outputted from the single chip microcomputer 1, and also the position detection from the outside and the panel switch input and further the control output for panel display may be transmitted or received tthrough an LSI such as a interface adapter. The printer controller system 1000 may be provided with an expanding RAM which can be accessed by the single chip microcomputer 1.

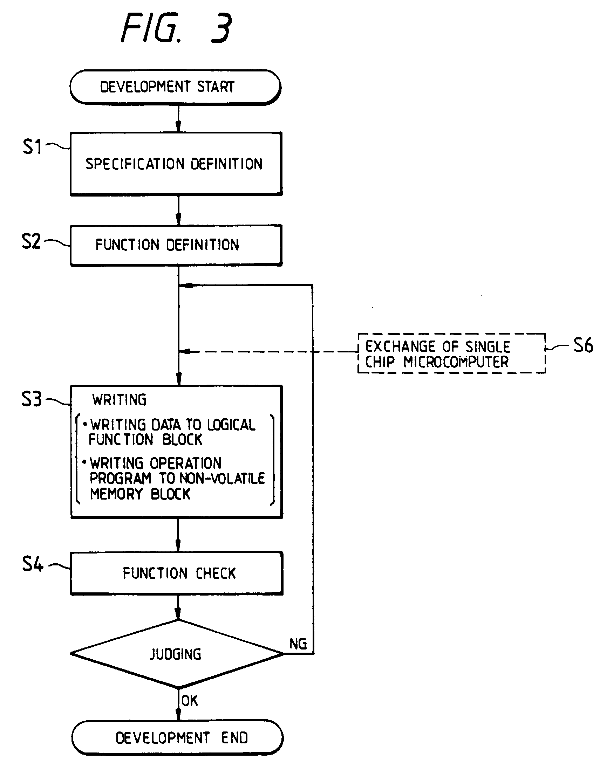

FIG. 3 shows an example of procedure of developing the microcomputer application system such as the printer controller system 1000 using the single chip microcomputer 1.

When the system is developed, first a required specification of the system is defined (step S1). Next, function of a single chip microcomputer 1 required to reflect the specification is defined (step S2). In order that the specification defined in this manner is reflected to the single chip microcmputer 1, required information is written in a logical function block 1101 and/or a non-volatile memory block 1103 (step S3). Data to set the required logic function is written in the logical function block 1101, and operation program for an operation control block 1102 required to utilize the logical function set to the logical function block 1101 and function of other circuit blocks is written in the non-volatile memory block 1103. Since the single chip microcomputer 1 may not include the non-volatile memory block 1103, the operation program is supplied by a separate chip then. After the function of the single chip microcomputer 1 is set by writing the data, function check of the single chip microcomputer 1 is performed by system debug or the like (step S4). As a result of the function check, if intended specification or function is satisfied, the development of the required system is finished. That is, function necessary to control the required microcomputer application system such as the printer controller system 1000 is embodied in the single chip microcomputer, and the development of the system is finished. If any inconvenience exists as a result of the function check, a result of the system debug or the like is utilized and the process is returned to the step of writing the data again so that the inconvenience is improved. In this case, the single chip microcomputer 1 itself is exchanged by a new one (step S6), and then the writing is performed again from the beginning.

In the development method of the above-mentioned microcomputer application system, any of means for writing the semiconductor integrated circuit for data processing, such as the single chip microcomputer 1 is not limited. However, the single chip microcomputer 1 of the embodiment utilizes a writing device such as a general EPROM writer for a non-volatile semiconductor storage device such as EPROM or EEPROM capable of being written electrtically, and has the operation specification that the logical function block 1101 and/or the non-volatile memory block 1103 can be written from the outside electrically. For example, the operation specification, although not particularly limited thereto, is that if the writing operation is commanded from the mode terminal, the prescribed external terminal functions as an access terminal for non-volatile storage elements of the logical function block 1101 and/or the non-volatile memory block 1103. According to the operation specification, the single chip microcomputer 1 becomes equivallent apparently to the non-volatile semiconductor storage device capable of being written electrically for the general EPROM writer, thereby the setting and further change of the function of the single chip microcomputer 1 become quite easy.

FIG. 2 shows appearance constitution of a general EPROM writer 1200. The general EPROM writer 1200, although not particularly limited thereto, comprises a socket portion 1201 for installing a semiconductor integrated circuit to be made the writing object, a keyboard portion 1202 for assigning the operation mode in response to sorts of non-volatile storage elements and inputting the data to be written, a display portion 1203 for displaying the input state and the operation state from the keyboard portion 1202, a power supply connector portion 1204, and a connector portion 1205 for external extension capabble of being connected to other devices by a serial interface or the like, all portions being arranged on the outside of a casing 1206, and a control circuit for performing writing or rewriting in accordance with the command of the keyboard 1202 or the like is included in the inside. When the single chip microcomputer 1 is installed to such a general EPROM writer 1200, if the external terminal of the single chip microcomputer has it is cannot be interfaced with the socket portion 1201, an adapter for connecting the external terminals assigned as the access terminal for non-volatile storage elements of the logical function block 1101 and/or the non-volatile memory block 1103 to the socket portion 1201 may be utilized.

Now, the single chip microcomputer 1 and development method of a microcomputer application system utilizing this will be described further in detail.

FIG. 5 shows a more specified example of the single chip microcomputer 1 shown in FIG. 1 which is an example useful to understand the invention. The single chip microcomputer 1 shown in FIG. 5 is constituted on one semiconductor substrate such as silicon by a processor 5 comprising a CPU (central processing unit) 2 as an example of a logical operation control block, a RAM (random access memory) 3 and a ROM (read only memory) 4, a PLA (programmable logic array) 6 as an example of a logical function block having variable logic structure, and an input/output port (simply referred to as I/O) 7, respective blocks being connected by a common bus 8. The PLA 6 is connected directly to the I/O 7 and the CPU 2 by signal lines 9, 10.

The ROM 4 serves to store the operation program as software of the single chip microcomputer 1, and the PLA 6 is made a logical function block to realize a part of hardware of the single chip microcomputer 1 being programmable and includes a non-volatile storage element capable of being written electrically.

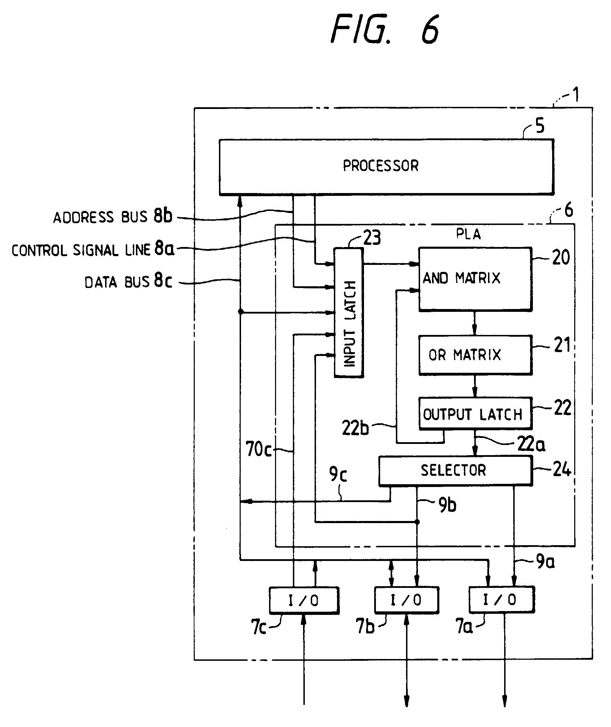

FIG. 6 shows a detailed example of the single chip microcomputer 1 of FIG. 5 centering around the constitution of the PLA 6.

The PLA 6 is constituted by an AND matrix 20, an OR matrix 21, an output latch 22, an input latch 23, and a selector 24, and also wiring connecting between respective circuits. Connection between the processor 5 and the PAL 6 is performed by a control signal line 8a, an address bus 8b and a data bus 8c so as that signals generated by the processor 5 are inputted to the input latch 23 of the PLA 6. Interface of the single chip microcomputer 1 with the outside is performed by an output port 7a, an input/output port 7b and an input port 7c connected to the data bus 8c. Input to the input latch 23 of the PLA 6 is made output 70c of the control signal line 8a, the address bus 8b, the data bus 8c and the input port 7c, and output 9c of the output selector 24, and output of the input latch 23 is supplied to the AND matrix 20. Output of the AND matrix 20 is made input of the OR matrix 21, and output of the OR matrix 21 is supplied to the output latch 22. Output 22a of the output latch 22 is supplied to the selector 24, and partial signal 22b thereof is made input of the AND matrix 20. Among outputs of the selector 24, outputs 9a, 9b are made inputs of the output port 7a and the input/output port 7b respectively, and output 9c is connected to the data bus 8c.

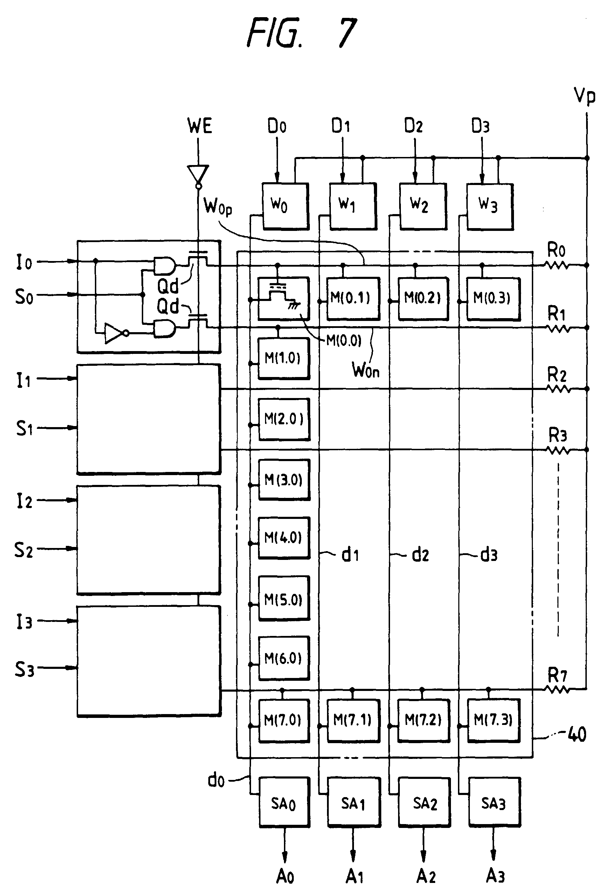

FIG. 7 shows an example of the AND matrix 20. The AND matrix 20, although not particularly limited thereto, includes non-volatile storage elements constituting an EPROM (eraseable programmable read only memory) of ultraviolet ray erasing type having channel injection structure capable of being written electrically. The AND matrix 20 is constituted to obtain four independent AND outputs (Ao - A3) to four inputs (Io - I3). The AND matrix 20 includes a memory array cell 40 constituted by matrix arrangement of the non-volatile storage elements M (0,0) - M(7,3) in eight rows and four columns. Since constitution of the non-volatile storage elements themselves constituting the EPROM capable of being written electrically is already known, the detailed description shall be omitted here. However, the state that the threshold voltage of the non-volatile storage element is at relatively low level of about 1[V] shall be defined as the erasing state, and state that it is at relatively high level of about 5[V] shall be defined as the writing state.

Writing to the non-volatile storage elements is performed every four bits in row unit. That is, the writing data is supplied to writing terminals Do - D3, and one of selecting lines So - S3 is made selective level such as high level, and the writing voltage (for example, 12.5[V]) is supplied to a writing terminal Vp. In this case, depending on state of the inputs Io - I3, it is determined whether positive logic or negative logic should be written. In the input Io for example, when the input Io is made high level, the word line Wop is selected, and when the input Io is made low level, the word line Won is selected. The writing voltage is supplied through a resistor Rj (j = 0 - 7) to the gate electrode of the non-volatile storage element where the gate electrode is connected to the selected word line. Voltage converting circuits Wo - W3 receiving the writing data to the writing terminals Do - D3 generate the drain voltage required for the writing when the writing data level is high level, and supply it to the data lines do - d3 respectively. Thereby the non-volatile storage elements with the erasing state being the initial state is made the writing state when the word line is selected and the writing data of high level is supplied, and others maintain the erasing state.

According to such writing operation, program of the non-volatile storage elements M(0,0) - M(7,3) included in the memory cell array 40 is performed.

When the programmed AND matrix 20 performs logic operation, the writing terminal Vp is supplied with the power source voltage of the circuit (or the ground potential), and the writing signal WE is made low level and all signals So - S3 are made high level. Thereby the word line is selected in accordance with the level of the inputs Io - I3, and the data level corresponding to the program state of the non-volatile storage elements with the gate electrode connected to the selected word line is detected through the data lines do - d3 in sense amplifiers SAo - SA3. As a result, the AND outputs Ao - A3 can be obtained from the sense amplifiers SAo - SA3. MOSFET Qd in FIG. 7 is a depletion type MOSFET.

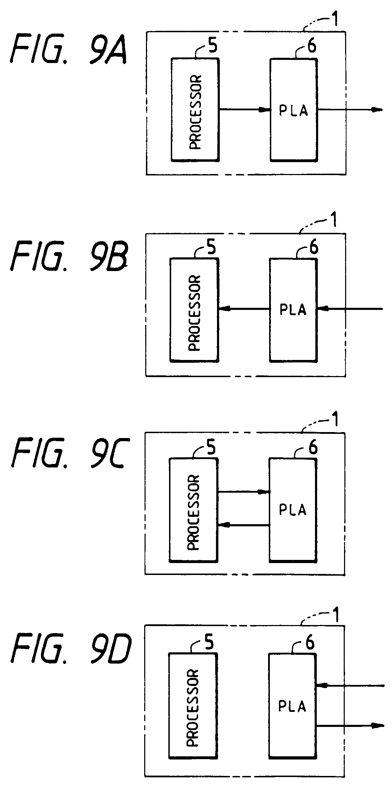

FIG. 8 shows an example of the OR matrix 21 included in FIG. 6. The OR matrix 21 is constituted by an OR circuit OR1 with two inputs being the AND outputs Ao, A1, an OR circuit OR2 with two inputs being the AND outputs A2, A3, an OR circuit CR3 with two inputs being outputs of the OR circuits OR1, OR2, and an output selecting circuit 50 for selecting outputs of the OR circuit OR1 and the OR circuit OR3.

If input signal 51 of the selecting circuit 50 is made high level, a transistor T1 is turned on and a transistor T2 is turned off, and the OR matrix 21 obtains AND outputs Oo, O1 shown in following logical expressions.

$$Oo = Ao + A1$$

$$O1 = A2 + A3$$

Also if the input signal 51 of the selecting circuit 50 is made low level, the transistor T1 is turned off and the transistor T2 is turned on, and the OR matrix 21 obtains AND outputs Oo, O1 shown in following logical expressions.

$$Oo = Ao + A1 + A2 + A3$$

$$O1 = A2 + A3$$

The single chip microcomputer 1 shown in FIG. 6 performs exchange control of the input latch 23 and the selector 24 and therefore can be operated in modes shown in FIG. 9A through FIG. 9D for example.

In mode shown in FIG. 9A, information of buses 8a - 8c is selected as input of the input latch 23 of FIG. 6, and output of the selector 24 is supplied to the ports 7a, 7b, thereby output of the processor 5 is converted in the PLA 6 and then outputted to the outside of the single chip microcomputer 1.

In mode shown in FIG. 9B, output of the ports 7b, 7c is selected as input of the input latch 23, and the output 9c is selected as output of the selector 24, thereby signal supplied from the outside of the single chip microcomputer 1 is converted in the PLA 6 and then supplied to the processor 5.

In mode shown in FIG. 9C, information of the buses 8a - 8c is selected as input of the input latch 23, and output of the selector 24 is also supplied to the bus 8c, thereby output of the processor 5 is converted in the PLA 6 and returned again to the processor 5.

In mode shown in FIG. 9D, output of the ports 7b, 7c is selected as input of the input latch 23, and output 9a, 9b is selected as output of the selector 24, thereby irrespective of the processor 5, signal supplied from the outside of the single chip microcomputer 1 is converted in the PLA 6 and outputted again to the outside of the single chip microcomputer 1.

Two modes or more among those shown in FIG. 9A through FIG. 9D respectively may be combined. For example, in combination of modes shown in FIG. 9A and FIG. 9B, input of the PAL 6 is divided, and one is made output (8a - 8c) of the processor 5 and other is made input (7b, 7c) from the outside, and output of the PLA 6 is also divided, and one is made input (8c) of the processor 5 and other is made output (7a, 7b) to the outside.

In the single chip microcomputer 1 as above described, to the PLA 6 including non-volatile storage elements of ultraviolet ray erasing type capable of being written electrically, in response to function required to the single chip microcomputer 1, the logical constitution, i.e., the program state to the non-volatile storage elements is set. For example, when the single chip microcomputer 1 is utilized and the printer controller system 1000 is developed, required data is written in the non-volatile storage elements of the PAL 6 in response to the required specification of the printer controller system 1000. This operation corresponds to step S3 of FIG. 3. For example, the general EPROM writer 1200 in FIG. 2 can be utilized in writing the data to the PAL 6.

When the microcomputer application system such as the printer controller system 1000 is developed, as described in step S6 of FIG. 3, exchange to a new single chip microcomputer 1 with other logical information written therein may be performed.

In the non-volatile storage element of the PAL 6, a non-volatile storage element for constituting a MNOS (metal nitride oxide semiconductor) or a floating gate type EEPROM (electrically erasable and programmable read only memory) capable of being written or erased electrically may be utilized. In this case, the general EPROM writer 1200 can be also utilized.

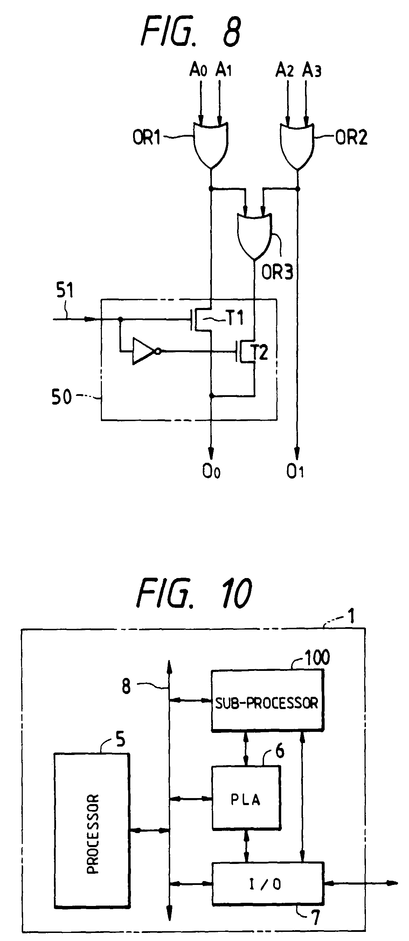

Next, as a logical function block of variable logic structure, a single chip microcomputer constituted by adding a programmable logic circuit with processor structure, i.e., a subprocessor will be described. The single chip microcomputer 1 as shown in FIG. 10 is constituted in that a subprocessor 100 to be connected to the common bus 8, the PLA 6 and the I/O 7 is added to the constitution shown in FIG. 5.

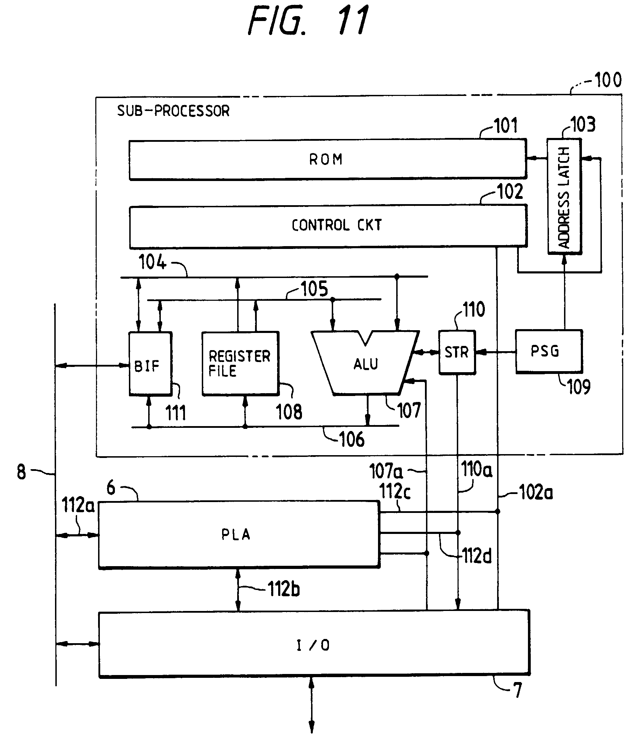

FIG. 11 shows a constitution example of the subprocessor 100, and connection relation between the subprocessor 100, the PLA 6, the I/O 7 and the common bus 8.

The subprocessor 100 comprises a ROM 101 for storing instruction, a control circuit 102 for generating control signal based on stored information of the ROM 101, an address latch 103 for holding next address to access the ROM 101, an ALU (arithmetic and logic unit) 107 connected to first, second and third data buses 104, 105, 106, a register file 108, a PSG (programmable sequential generator) 109, a STR (status register) 110 controlled by the PSG 109, and a BIF (bus interface circuit) 111 connecting the subprocessor 100 and the common bus 8.

The PLA 6 is connected to the common bus 8 by a wiring 112a, to the I/O 7 by a wiring 112b, to control signal 102a generated in the control circuit 102 of the subprocessor 100 by a wiring 112c, to output 110a of the status register 110 by a wiring 112d, and to signal 107a inputted from the I/O 7 to the ALU 107 respectively.

The PSG 109, the ROM 101 and the PLA 6 are constituted by non-volatile storage elements capable of being written electrically as above described. Consequently in the single chip microcomputer 1 also shown in FIG. 10, the logical constitution of the non-volatile storage elements included in the PSG 109, the ROM 101 and the PLA 6 is determined in response to the function required in the single chip microcomputer 1. For example, in the case of application to the specific microcomputer application system such as the printer controller system 1000, such logical constitution is set in accordance with relation to function of the whole system.

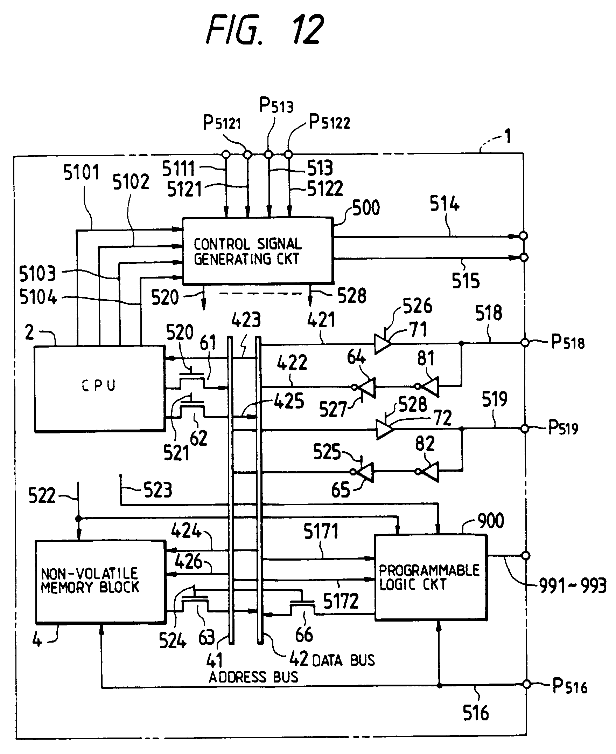

FIG. 12 shows an example of the single chip microcomputer 1 where the ROM 4 to store the software program is converted into EPROM and incorporated.

In FIG. 12, the single chip microcomputer 1 comprises a CPU 2, a ROM 4 such as EPROM as the non-volatile memory block capable of being written electrically so as to store the software program (the ROM 4 being hereinafter referred to also as the non-volatile memory block 4), a control signal generating circuit 500, and a programmable logic circuit 900 as function module to constitute the subprocessor and the PLA. The CPU 2, the non-volatile memory block 4, the programmable logic circuit 900 and the like are connected to the address bus 41 and the data bus 42. Particularly, a switch element 61 is interposed between the address bus 41 and the CPU 2, a switch element 62 is interposed between the data bus 42 and the CPU 2, a switch element 63 is interposed between the non-volatile memory block 4 and the data bus 42, and a switch element 66 is interposed between the programmable logic circuit 900 and the data bus 42. The address bus 41 can be interfaced with the outside of the single chip microcomputer 1 by a signal line 519 through a three-state driver 72 functioning as an output bufffer, an inverter 82 functioning as an input buffer and a three-state inverter 65. Also the data bus 42 can be interfaced with the outside of the single chip microcomputer 1 by a signal line 518 through a three-state driver 71 functioning as an output buffer, an inverter 81 functioning as an input bufffer and a three-state inverter 64.

The control signal generating circuit 500 is supplied with control signals 5101 - 5104 for controlling data transfer from the CPU 2, and with control signals 5111, 5121, 513, 5122 for commanding operation mode of the single chip microcomputer 1 from the outside of the single chip microcomputer 1. The control signal generating circuit 500 receiving such various sorts of signals generates control signals 520 - 528 to control the data transfer timing between the CPU 2, the non-volatile memory block 4, the programmable logic circuit 900 and the data bus 42 and the address bus 41 and further the signal lines 518, 519. The signals 514, 515 outputted from the control signal generating circuit 500 to the outside are signals to mean the read cycle and the write cycle to the outside, and the non-volatile memory block 4 and the programmable logic circuit 900 are connected to a signal line 516 which supplies high voltage required for the writing of non-volatile storage elements included in these members commonly from the outside.

In the single chip microcomputer 1 shown in FIG. 12, the non-volatilememory block 4 and the programmable logic circuit 900 commonly connected to the data bus 42 and the address bus 41 are arranged in the same address space. Consequently, in the writing processing to the non-volatile memory block 4 and the programmable logic circuit 900, special processing or circuit constitution is not required to change the address space, but addresses allocated to respective elements are assigned thereby the writing and verifying processing to the required non-volatile storage elements included in them can be simply performed by the same control or the same sequence. As a result, the writing device such as the general EPROM writer 1200 can be utilized commonly to both the non-volatile memory block 4 and the programmable logic circuit 900, and also when the incorporated CPU 2 is used, the writing and verifying processing can be performed by the same sequence.

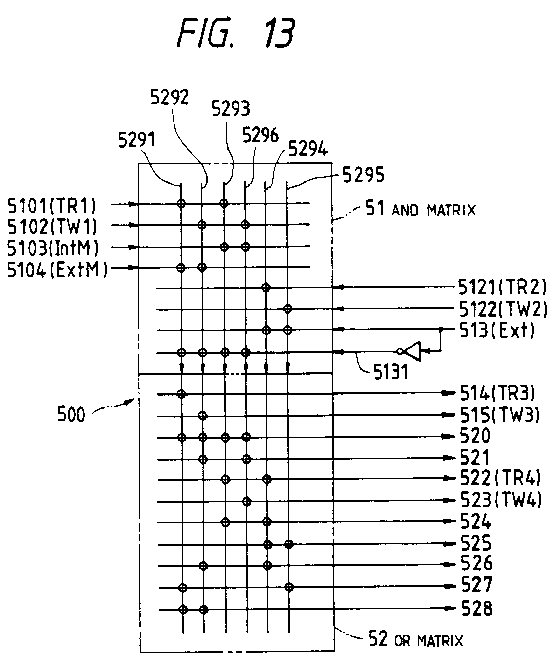

FIG. 13 shows an example of the control signal generating circuit 500 shown in FIG. 12. The control signal generating circuit 500, although not particularly limited thereto, is composed of an AND matrix 51 and an OR matrix 52. In the AND matrix 51, six longitudinal signal lines are made AND output signal lines respectively, and among lateral signal lines intersecting with the longitudinal signal lines, a result of taking logical product to input of one lateral signal line corresponding to intersection denoted by symbol O is made a corresponding AND output. For example, inputs of lateral signal lines denoted by symbol O and intersecting with longitudinal AND output signal lines are all high level, output of the corresponding longitudinal AND output signal line is made high level. The six AND output signal lines in the AND matrix 51 are made input of the OR matrix 52, and regarding lateral OR output signal lines intersecting with the six longitudinal input signal lines, a result of taking logical sum to input of the longitudinal input signal line corresponding to intersection denoted by symbol O is made an OR output. For example, if any one of inputs of the longitudinal input signal lines denoted by symbol O and intersecting with the lateral OR output signal lines is high level, output of the corresponding lateral OR output signal line is made high level.

When control signal 513 supplied from the outside is low level, in the AND output signal lines 5291, 5292, 5293, 5296. receiving the inverted signal 5131 at intersection of symbol O, the AND output is obtained so that level of the control signals 5101 - 5104 outputted from the CPU 2 is made effective. In this state, when the control signals 5101 (TR1), 5104 (ExtM) are high level, the AND output signal line 5291 becomes high level and the external device read mode is set. In the corresponding operation mode, the control signal 514 (TR3) to mean the read cycle to the outside is asserted to high level, and also the control signals 520, 527, 528 are asserted to high level. The control signal 520 at high level controls the switch element 61 to the ON-state and the control signal 528 at high level controls the three-state driver 72 to enable the output operation, thereby the address signal outputted from the CPU 2 is outputted through the address bus 41 and the signal line 519 to the outside. Data outputted by an external accessed module (not shown) in response to the address signal and the control signal 514 is supplied to the signal line 518 from the outside, and supplied from the three-state inverter 64 turned on by the control signal 527 of high level to the data bus 42 and read in the CPU 2. In the external device read mode, since the control signal 524 is made low level, the data taken into the data bus 42 from the outside is not disturbed by the operation of the non-volatile memory block 4 and the programmable logic circuit 900.

When the control signal 513 is at low level, if the control signals 5102 (TW1), 5104 (ExtM) are made high level, the output signal line 5292 becomes high level and the external device write mode is set. At the corresponding operation mode, the control signal 515 (TW3) to mean the write cycle to the outside is asserted to high level, and also the control signals 520, 521, 526, 528 asserted to high level. Thereby the address signal outputted from the CPU 2 is outputted through the switch element 61 turned on, the three-state driver 72 controlled to enable the output operation and the signal line 519 similarly as above described to the outside, and the written data outputted from the CPU 2 is supplied through the switch element 62 turned on by the control signal 521 at high level, the data bus 42, the three-state driver 71 controlled to enable the output operation by the control signal at high level and the signal line 518 to the outside, thereby the writing to the accessed module on the outside is performed.

When the control signal 513 is at low level, if the control signals 5101 (TR1), 5103 (IntM) are at high level, the output signal line 5293 becomes high level and the internal device reading mode is set. In the corresponding operation mode, the control signals 520, 522 (TR4), 524 are asserted to high level. Thereby the address signal outputted from the CPU 2 is supplied through the switch element 61 to the address bus 41, and is made the address signal 426 of the non-volatile memory block 4 or the address signal 5172 of the programmable logic circuit 900. At the same time, the reading operation is commanded to the non-volatile memory block 4 and the programmable logic circuit 900 by the control signal 522. In this case, since the non-volatile memory block 4 and the programmable logic circuit 900 are arranged in the same address space being linear, even if the addrwess signals are supplied to both, one of them only performs the reading of the data in accordance with the address signal, and the read data is supplied through any one of the switch elements 63 and 66 to the data bus 42. The CPU 2 reads the data outputted to the data bus 42 in such manner from the signal line 423.

When the control signal 513 is at low level, if the control signals 5102 (TW1), 5103 (IntM) are at high level, the output signal line 5296 becomes high level and the internal device writing mode is set. In the corresponding operation mode, the control signals 520, 521, 523 (TW4) are asserted to high level. Thereby the address signal outputted from the CPU 2 is supplied through the switch element 61 to the address bus 41, and the writing data outputted from the CPU 2 is supplied through the switch element 62 to the data bus 42, and further the writing operation is commanded to the programmable logic circuit 900. Thereby data is written in flip-flop or the like allocated to required address of the programmable logic circuit 900 assigned by the address signal.

On the other hand, when the control signal 513 is at high level, the AND output signal lines 5291, 5292, 5293, 5296 receiving the inverted signal 5131 at intersection denoted by symbol O are negated to low level irrespective of the level of the control signals 5101 - 5104 outputted from the CPU 2, thereby the control signals 520, 521 are controlled normally to low level, and output of data and address to the data bus 42 and the address bus 41 by the CPU 2 is made substantially impossible. That is, the CPU 2 is electrically separated from the addresss bus 41 and the data bus 42. In this state, if the control signal 5121 (TR2) is made high level, the AND output signal line 5294 becomes high level and the reading mode is set based on access from the outside. This operation mode is utilized in the test reading for the verifying after the writing by the EPROM writer or the like. In the corresponding operation mode, the control signals 522 (YR4), 524, 525, 526 are asserted to high level. Thereby the address signal supplied from the outside to the signal line 519 is supplied through the three-state inverter 65 controlled in operable state by the control signal 525 to the address bus 41, and further supplied from the address bus 41 through the signal lines 426 and 5172 to the non-volatile memory block 4 and the programmable logic circuit 900. The reading operation is commanded to the non-volatile memory block 4 and the programmable logic circuit 900 by the control signal 522, and data output terminals of the non-volatile memory block 4 and the programmable logic circuit 900 are connected to the data bus 41 by the control signal 524. Consequently, any one of the non-volatile memory block 4 or the programmable logic circuit 900 performs the reading operation in response to the address signal supplied from the outside, thereby required data to be read is supplied to the data bus 42. The reading data supplied to the data bus 42 is supplied through the three-state driver 71 controlled to enable the output operation by the control signal 526 at high level to the signal line 518 and read to the outside.

When the control signal 513 is at high level, if the control signl 5122 (TW2) is made high level, the output signal line 529 becomes high level and the writing mode is set based on access from the outside. This operation mode is utilized in the writing by the EPROM writer such as a general EPROM writer 1200. In the corresponding operation mode, the control signals 525, 527 are asserted to high level. Thereby the address signal supplied from the outside to the signal line 519 is supplied through the three-state inverter 65 controlled in operable state by the control signal 525 to the addresss bus 41, and further supplied from the address bus 41 through the signal lines 426 and 5172 to the non-volatile memory block 4 and the programmable logic circuit 900. Data supplied from the outside to the signal line 518 is supplied through the three-state inverter 64 controlled in operable state by the control signal 527 to the data bus 42, and further supplied from the data bus 42 through the signal lines 424 and 5171 to the non-volatile memory block 4 and the programmable logic circuit 900. In this state, if high voltage for the writing is supplied from the external terminal to the signal line 516, the writing data is written to non-volatile storage elements in the prescribed address of the non-volatile memory block 4 or the programmable logic circuit 900 assigned by the address signal. The high voltage for the writing is made sdufficient voltage for the writing operation of about 10 - 25 [V] corresponding to the single memory LSI such as EPROM.

When the non-volatile memory block 4 and the programmable logic circuit 900 are constituted by non-volatile storage elements for constituting the EEPROM capable of being written and erased electrically, the voltage for erasing or writing may be supplied through the signal line 516, or the writing voltage or the erasing voltage may be formed by the internal step-up circuit.

Also in the single chip microcomputer 1 shown in FIG. 12, in the non-volatile storage elements of the non-volatile memory block 4 and the programmable logic circuit 900 included therein, required opertion program or data is written in response to relation of the function of the single chip microcomputer 1 itself and further the operation specification and the function of the whole body required in the application system.

When the non-volatile memory block 4 and the programmable logic circuit 900 are constituted by non-volatile storage elements, in the development of the microcomputer application system, exchange to a new single chip microcomputer 1 with separate information witten therein may be performed.

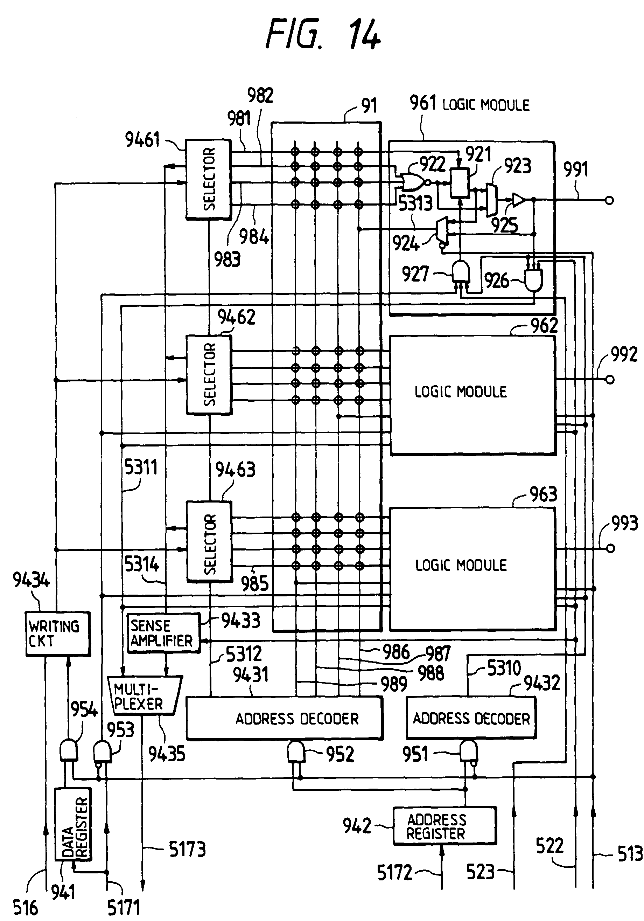

FIG. 14 shows a detailed example of the programmable logic circuit 900.

In FIG. 14, numeral 91 designates a NOR array including non-volatile storage elements, numerals 961 - 963 designate logic modules, numerals 9461 - 9463 designate selectors, numeral 9433 desiggnates a sense amplifier, numeral 9434 designates a writing circuit, numerals 9431, 9432 designate address decoders, numeral 941 designates a data register, numeral 942 designates an address register, and numeral 9435 desiggnates a multiplexer.

The logic module 961 comprises a NOR gate 922, a flip-flop 921, selectors 923 and 924, an output driver 925, and AND gates 926 and 927. The NOR array 91 may take logic constitution in response to the writing program state for a plurality of non-volatile storage elements included therein. The logic modules 961 - 963 perform change for signal outputted in accordance with logical constitution of the NOR array 91 so as to change the logic further programmable in response to the selective operation condition of the selectors 923, 924 and state of the flip-flop 921, and constitute the variable structure logic together with the NOR array 91. The logic modules 961 - 963 can be interfaced indirectly with the data bus 42 and the address bus 41 through the signal lines 5171 - 5173, and data can be inputted or outputted with the outside of the single chip microcomputer 1 through the terminals 991 - 993. When the control signal 513 is at low level, object of the data input/output is made the flip-flop 921 at the inside of the logical modules 961 - 963, and when the control signal 513 is at high level, the writing and the reading to non-volatile storage elements to constitute the NOR logic of the NOR array 91 are made possible.

When the control signal 513 is made low level and the internal device reading mode is set, the address signal outputted from the CPU 2 is supplied through the address bus 41 to the signal line 5172. The address signal i-s set to the address register 942 and then supplied through the AND gate 951 to the address decoder 9432, and decoded by the address decoder 9432. The address decoder 9432 forms the selective signal which selects one among the logical modules 961 - 963 in response to the input address signal. The selective level is made high level. The output selective signal 5310 of the address decoder 9432 is supplied to the AND gate 926 of the logic module. The AND gate 926 is also supplied with the control signal 522 being high level in the corresponding operation mode. Data of the flip-flop 921 is outputted from the AND gate 926 through the selector 923 and the output driver 925, and the output data passes through the signal line 5311 and the selector 9435 and is read from the signal line 5173 to the data bus 42.

When the control signal 513 is made low level and the internal device writing mode is set, the address signal outputted from the CPU 2 is supplied to the signal line 5172 and the data is supplied to the signal line 5171.

Thereby the data is supplied through the AND gate 953 to the AND gate 927 of the logic module. The AND gate 927 is supplied with the control signal 523 being high level in the corresponding operation mode, and with the selective signal in response to the decode result of the address signal from the address decoder 9432. Consequently, the output data of the CPU 2 can be written in the flip-flop 921 assigned by the address signal.

When the control signal 513 is made high level and the writing mode is set based on the external access, output of the address register 942 is supplied through the AND gate 952 to the address decoder 9431. The address decoder 9431 selects any of the word lines 986 - 989 of the NOR array 91 in response to the input address signal. Thereby data transferred from the outside of the single chip microcomputer 1 to the signal line 5171 is set to the data register 941, and supplied through the AND gate 954 to the writing circuit 9434. Synchronizing with the timing of supplying the writing high voltage from the outside, the writing data is supplied to the selectors 9461 - 9463. The selector selecting signal 5312 of the address decoder 9431 selects the bit lines 981 - 985 in response to the input address signal, and the writing data is given to the selected bit line, thereby the writing to non-volatile storage elements is performed. Then the selector 924 at the inside of the logic module is controlled at its output in high impedance state by the signal 513, thereby mixing of undesired signal from the logic module into the word lines 986 - 989 is suppressed.

When the control signal 513 is made high level and the reading mode is set based on the external access, in similar manner to the writing mode, the bit line data of the NOR array 91 assigned by the address decoder 9431 is supplied through the selectors 9461 - 9463 to the sense amplifier 9433 and and read through the selector 9435 to the signal line 5173.

As above described, when the control signal supplied from the outside is at low level, input/output of the data with the flip-flop 921 at the inside of the logic modules 961 - 963 is performed, and when the control signal 513 is at high level, the writing/reading based on the external access is performed to the NOR array 91 comprising non-volatile storage elements. When nonvolatile storage elements capable of being writtten or erased electrically are used in the NOR array 91, an erasing circuit may be added thereby the erasing operation can be also performed in similar circuit constitution to the writing.

Even if the constitution of the programmable logic circuit 900 is varied, for example, when a plurality of NOR arrays 91 exist or the logic structure at the inside of the logic modules 961 - 963 is different, when the number of the flip-flops 921 is different, and when the signal lines 991 - 993 from the logic modules 961 - 963 to the external terminal do not exist, the constitution similar to that of the embodiment can be adopted so as to enable the access from the CPU 2 of the single chip microcomputer and the external terminal.

According to the above description, the programmable logic circuit 900 of the single chip microcomputer 1 shown in FIG. 12 can include the PLA 6 in FIG. 7, the subprocessor 100 in FIG. 11, and further the circuit shown in FIG. 14 as the logical function block being the variable logic structure, but the programmable logic circuit 900 and the the non-volatile block 4, although not particularly limited thereto, can be arranged in the same address space linearly.

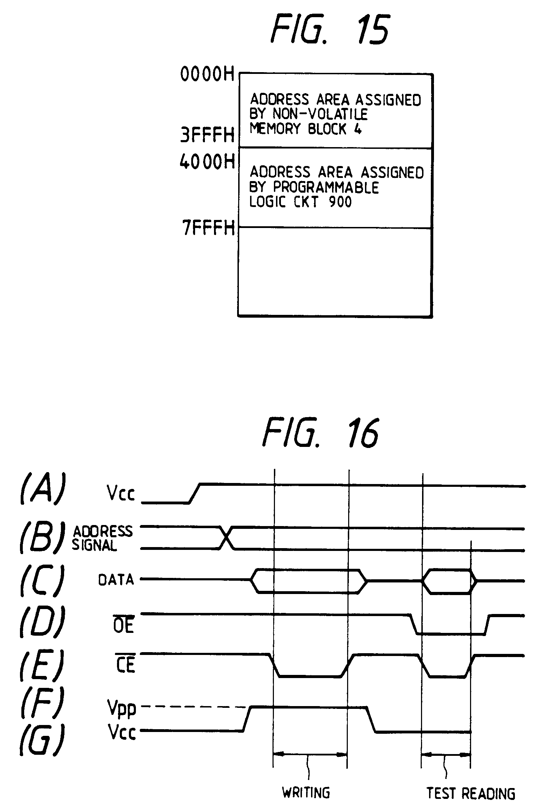

FIG. 15 shows an example of the address mapping state of the programmable logic circuit 900 and the non-volatile memory block 4 on the same address space. According to FIG. 15, addresses of 0000H - 3FFFH are allocated to the non-volatile memory block 4, and addresses of 4000H - 7FFFH are allocated to the programmable logic circuit 900. Since the programmable logic circuit 900 and the non-volatile memory block 4 are arranged in the same address space in this manner, different addresses can be supplied to both from the outside of the single chip microcomputer 1 thereby the writing and the test reading can be performed.

When address, data, control signal, timing and the like required in the writing and the test reading for verifying are made nearly the same as those in the standard single EPROM, in other words, when they are adapted for the general specification of the general writing device such as EPROM writer that the single EPROM or EEPROM is programmed, the general writing device is used as it is thereby the writing and verifying processing can be performed to non-volatile memory elements included in the single chip microcomputer 1 and capable of being written electrically. When the control signal 513 is made high level and the writing/reading mode by access from the outside is set, the address bus 41 and the data bus 42 with the programmable logic circuit 900 and the non-volatile memory block 4 being commonly connected are separated from the CPU 2 by the gate such as the switch elements 61, 62. Consequently, in the corresponding operation mode, the single chip microcomputer 1 seems similar to the non-volatile memory LSI such as single EPROM in the function. In other words, for the general writing device such as EPROM writer that the single EPROM or EEPROM is programmed, the external terminal to enable the interface with such device can be seen.

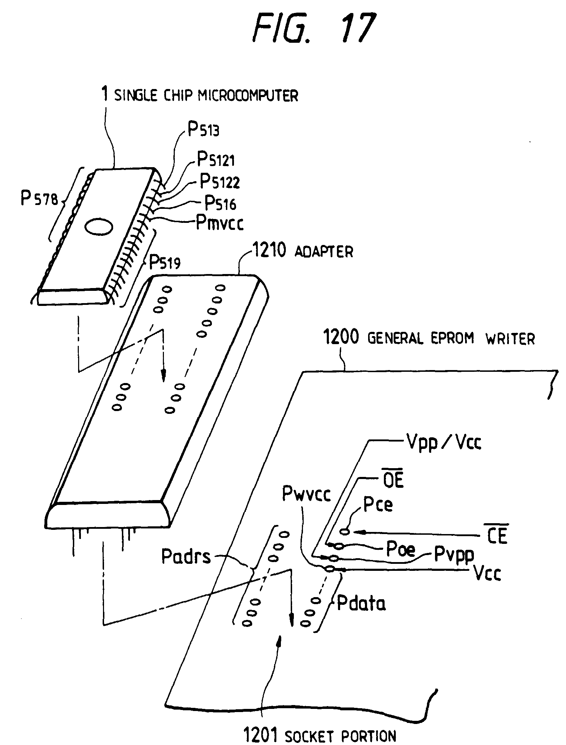

The general EPROM writer 1200 for the writing and the test reading to the non-volatile semiconductor storage device such as EPROM capable of being written electrically, although not particularly limited thereto, as shown in FIG. 17, comprises a power source terminal Pwvcc supplying the power source voltage Vcc (for examle 5V), an address output terminal Padrs outputting address signal, a control terminal Poe outputting the output enable signal $\overline{OE}$ to command the data input/output direction, a terminal Pvpp which can output the writing high voltage Vpp or the power source voltage Vcc selectively, a control terminal Pce outputting the chip enable signal $\overline{CE}$ to command selection/non-selection of a chip, and a data input/output terminal Pdata for inputting the read data and outputting the written data, all being arranged on the socket portion 1201. In such EPROM writer 1200, at the writing operation state, the output enable signal $\overline{OE}$ is made high level, the chip enable signal $\overline{CE}$ is made low level, and the output terminal of the writing voltage Vpp is made as high voltage as 12.5[V]. On the other hand, at the test reading state for verifying, the output enable signal $\overline{OE}$ is made low level, the chip enable signal $\overline{CE}$ is made low level, and the output terminal of the writing voltage Vpp is made voltage of about 5[V] corresponding to the power source voltage Vcc.

In the EPROM writer 1200, the terminal arrangement of the socket portion 1201 is adapted for the arrangement of external terminals in a general EPROM, so that the writing of data and the verifying can be performed on such general EPROM, for example, that manufactured by Hitachi, Ltd. in product name HN482764G, HN27C64G, HN4827128G, HN27128AG, HN27256G, HN27C256G or HN275612G.

The EPROM writer 1200 and the single chip microcomputer 1 shown in FIG. 12 are electrically connected, as shown in FIG. 17 for example, through an adapter 1210 such as a socket adapter connecting rerquired terminals of both devices in consideration of difference between both devices in the number and arrangement of external terminals.

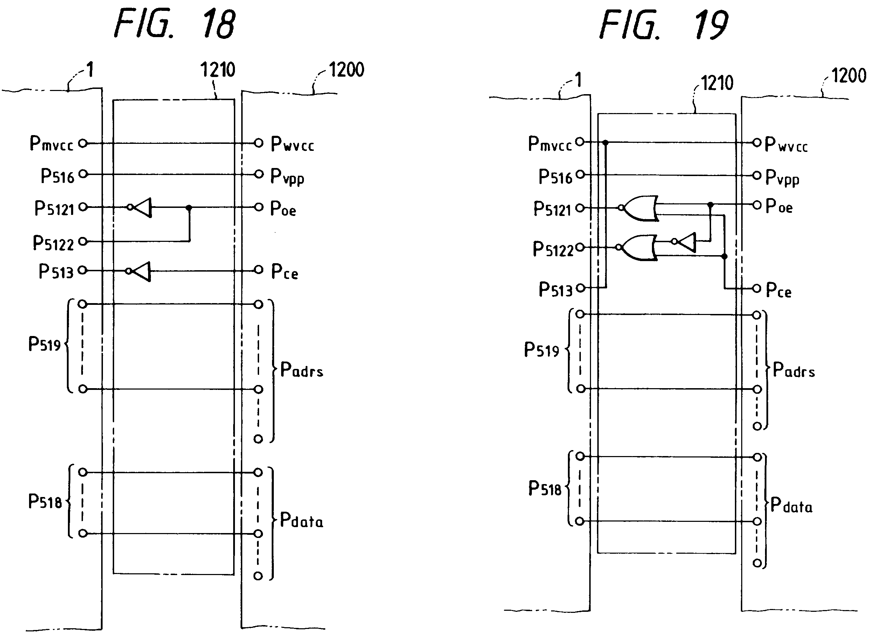

FIG. 18 shows an example of mode of connecting the single chip microcomputer 1 and the general EPROM writer 1200 through the adapter 1210. That is, the inverted signal of the chip enable signal $\overline{CE}$ outputted from the control terminal Pce of the general EPROM writer 1200 is supplied as the control signal 513 shown in FIG. 12 to the external terminal P513 of the single chip microcomputer 1, the writing voltage Vpp or the power source voltage Vcc selectively outputted from the external terminal Pvpp of the general EPROM writer 1200 is supplied through the external terminal P516 of the single chip microcomputer 1 shown in FIG. 12 to the signal line 516, the inverted level of the output enable signal $\overline{OE}$ outputted from the control terminal Poe of the general EPROM writer 1200 is supplied as the control signal 5121 of FIG. 12 to the external terminal P5121 of the single chip microcomputer 1, the output enable signal $\overline{OE}$ is supplied as the control signal 5122 of FIG. 12 to the external terminal P5122 of the single chip microcomputer 1, and the address signal outputted from the address output terminal Padrs of the general EPROM writer 1200 is supplied through the external terminal P519 of the single chip microcomputer 1 to the signal line 519. The data input/output terminal Pdata of the general EPROM writer 1200 is connected to the data input/output terminal P518 corresponding to the signal line 518 of the single chip microcomputer 1, and further the power source terminal Pwvcc of the general EPROM writer 1200 is connected to the power source terminal Pmvcc of the single chip microcomputer 1. In such constitution that the control signal 5121 is made the inverted level signal of the control signal 5122 by an inverter (not shown) at the inside of the control signal generating circuit 50 and only the control signal 5122 is supplied directly from the external terminal, the output enable signal $\overline{OE}$ supplied directly to the corrresponding external terminal.

FIG. 19 shows another example of connection mode. In such mode, the power source voltage Vcc outputted from the power source terminal Pwvcc on the adapter 1210 is supplied as the control signal 513 of high level to the external terminal P513 of the single chip microcomputer 1, a result of taking the NOR logic on the adapter to the output enable signal $\overline{OE}$ and the chip enable signal $\overline{CE}$ is supplied as the control signal 5121 to the external terminal P5121 of the single chip microcomputer 1, and a result of taking the NOR logic on the adapter 1210 to the inverted level of the output enable signal $\overline{OE}$ and the chip enable signal $\overline{CE}$ is supplied as the control signal 5122 to the external terminal P5122 of the single chip microcomputer 1. Other connection relation is similar to that in FIG. 18.

Although not particularly limited thereto, the wiring and the circuit shown in FIG. 18 or FIG. 19 are incorporated in the adapter 1210.

FIG. 16 (A) - (G) shows a timing chart required in the data writing and the test reading for verifying, the data being supplied from the EPROM writer 1200 to the single chip microcomputer 1 through the adapter 1210.

When the single chip microcomputer 1 is connected to the general EPROM writer 1200 as above described, if the power source voltage Vcc of about 5[V] is applied to the single chip microcomputer 1, the single chip microcomputer 1 becomes operable. And then the address signal of address to be written in the non-volatile memory block 4 or the programmable logic circuit 900 is outputted from the general EPROM writer 1200, and the output enable signal $\overline{OE}$ is held to high level and the writing high voltage Vpp of about 12.5[V] is outputted, and the chip enable signal $\overline{CE}$ is asserted to low level. Thereby the writing of data is started to the required non-volatile storage element selected by the address information. The period of asserting the chip enable signal $\overline{CE}$ to low level is dependent on the characteristics of the non-volatile storage element constituting the EPROM, but is about 1 msec for example. The chip enable signal $\overline{CE}$ is negated to high level, and the writing voltage Vpp supplied to the signal line 516 of the single chip microcomputer 1 is returned to the power source voltage Vcc, thereby the writing mode is finished.

The output enable signal $\overline{OE}$ is asserted to low level, and the address signal utilized in the writing is outputted and the chip enable signal $\overline{CE}$ is asserted to low level, thereby data of the non-volatile storage element selected by the address signal is outputted from the single chip microcomputer 1. Judging is performed regarding whether the read data is coincident with the written data or not, thereby the verifying processing is performed regarding whether the data is written normally by the writing operation or not. Although not particularly limited thereto, the judging is performed within the EPROM writer 1200.

When the writing of required data and the verifying are performed in this manner, the single chip microcomputer 1 can execute the data processing depending on the logic attained by the writing state.

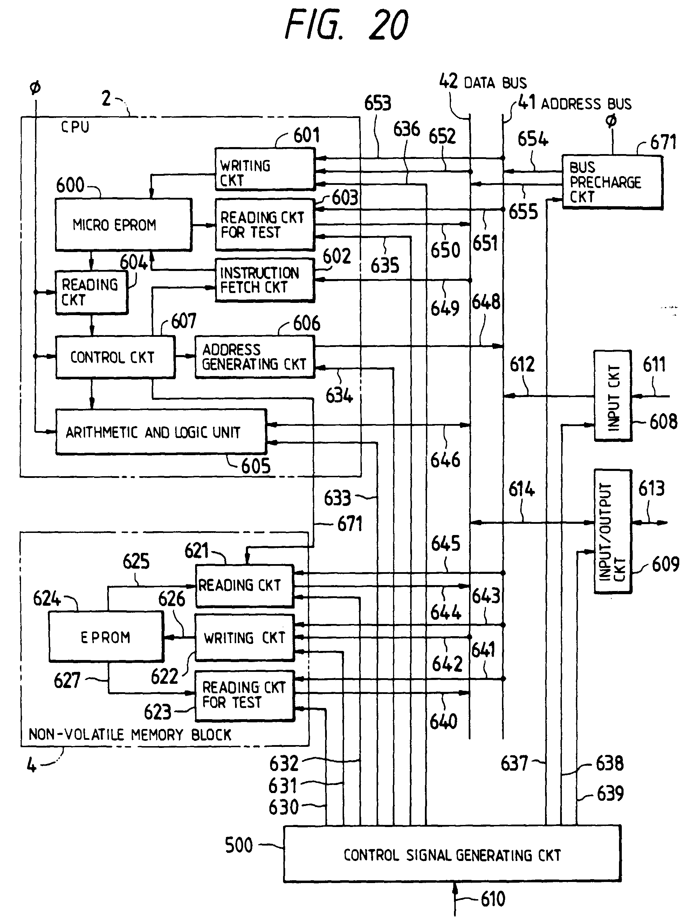

FIG. 20 shows an example of a single chip microcomputer including the CPU 2 adopting the microprogram control.

The single chip microcomputer of FIG. 20 is provided with an EPROM for storing microprogram (hereinafter referred to simply as micro EPROM) as a device including non-volatile storage elements, and an EPROM 624 for storing the operation program comprising a plurality of macro instructions, both being arranged on one semiconductor substrate.

The micro EPROM 600 included in the CPU 2 is connected to a writing circuit 601 connected to the address bus 41 and the data bus 42 by signal lines 653, 652; a test reading circuit 603 connected to the address bus 41 and the data bus 42 by signal lines 651, 650; and an instruction fetch circuit 602 connected to the data bus 42, respectively, and further connected to a reading circuit 604 for reading micro instruction of the micro EPROM 600 at the instruction control operation state. The micro instruction outputted from the reading circuit 604 is supplied to a control circuit 607 and decoded, thereby the generated control signal controls an arithmetic and logic circuit 605 and the instruction fetch circuit 602 as well as an address generating circuit 606. The address generating circuit 606 supplies address of the macro instruction through a signal line 648 to the address bua 41. The CPU 2 is operated synchronizing with the clock signal ϕ.

The non-volatile memory block 4 comprises a reading circuit 621, a writing circuit 622, a test reading circuit 623, all connected respectively to the address bus 41 and the data bus 42, and an EPROM 624 connected to these circuits. The reading circuit 621 is also connected to the control circuit 607 of the processor 2. The address bus 41 and the data bus 42 are connected to a bus precharge circuit 671 controlled by the clock signal by the signal lines 654, 655, and further the address bus 41 is interfaced through the signal line 612, the input circuit 608 and the signal line 611 with the outside of the single chip microcomputer. Also the data bus 42 can be interfaced through the signal line 614, the input/output circuit 609 and the the signal line 613 with the outside of the single chip microcomputer.

Outputs 630 - 639 of the control signal generating circuit 500 connected tb the control signal line 610 from the outside are connected to each of the above-mentioned circuits so as to control the instruction control operation and the reading and the test operastion to the micro EPROM 600 and the EPROM 624.

The writing to the micro EPROM 600 is set by supplying the writing mode signal to the control signal input line 610. In this state, among the outputs 630 - 639 of the control signal generating circuit 500, the control signal 636 of the writing circuit 601, the control signal 638 of the input circuit 608 and the control signal 639 of the input/output circuit 609 only become effective, and other signals are controlled to the negate state. That is, output from the CPU 2, the non-volatile memory block 4 and the bus precharge circuit 671 to the data bus 42 and the address bus 41 is inhibited, and each of the buses 41, 42 is only used for the writing through the writing circuit 601 to the micro EPROM 600. The address information to select required elements from the non-volatile storage element group constituting the micro EPROM 600 is given to the external connection line 611 of the input circuit 608, and the writing data to the storage element selected by the address information is given from the external connection line 613 of the input/output circuit 609 controlled in the input direction, and further the writing signal is given to the control input line 610. Thereby required micro instruction information is written to the prescribed address of the micro EPROM 600 assigned by the external address signal.

Test regarding whether the writing operation has been performed correctly or not is performed in that the mode signal for the test reading of the micro EPROM 600 is given to the control input line 610. If the operation mode is set, among the outputs 630 - 639 of the control signal generating circuit 500, the control signal 635 of the test reading circuit 603, the control signal 638 of the input circuit 608, and the control signal 639 of the output circuit 609 become efffective. Thereby if the address signal is supplied to the external input line 611 and the mode signal for the test reading of the micro EPROM 600 is given to the control input line 610, the input/output circuit 609 is controlled to the output direction, and the reading data of the selected micro EPROM 600 is outputted through the test reading circuit 603, the connection line 650, the data bus 42, the connection line 614 and the input/output circuit 609 to the external connection line 613. Thereby verifying becomes possible at the outside.

The writing and the test reading to the non-volatile storage element group 624 of the non-volatile memory block 4 is also performed in similar manner to the writing and the test reading of the micro EPROM 600 in that the writing circuit 622, the test reading circuit 623, the input/output circuit 603 and the input/output circuit 609 are controlled by the control signal from the control signal generating circuit 500.

Operation of the semiconductor integrated circuit at normal mode, i.e., at the instruction control operation is performed syncchronizing with clock ϕ in following manner for example. If the address infformation generated by the address generating circuit 606 of the CPU 2 is transmitted through the address bus 41 to the reading circuit 621 of the non-volatile block 4, prescribbed macro instruction is read from the non-volatile storage element group 624 based on the signal of the reading signal line 671 from the control circuit 607 of the CPU 2 and taken through the data bus 42 to the instruction fetch circuit 602. The information held in the instruction fetch circuit 602 is given to the micro EPROM 600, and the micro EPROM 600 is addressed based on the information and the micro instruction is read in the reading circuit 604 in response to the addressing.

The read information is made the control information at the inside of the CPU 2. The micro instruction read in the reading circuit 604 is inputted to the control circuit 607 and decoded, and based on the decoding, control of the arithmetic and logic unit 605, the address generating circuit 606, the instruction fetch circuit 602, the memory reading circuit 621 and the like is performed. In such instruction control operation, the data bus 42 and the address bus 41 are precharged by the bus precharge circuit 671 acting synchronizing with the clock signal and a series of operation of the single chip microcomputer is synchronized with the clock signal ϕ supplied to the CPU 2. The parallel output bit number of the test reading circuit 603 and the reading circuit 604 in the CPU 2 need not be equal, and in the embodiment the parallel output bit number from the test reading circuit 603 is equal to the bit number of the data bus 42.

According to the present invention, following effects can be obtained.

(1) Utilizing a semiconductor integrated circuit for data processing composed of a logical function block which can realize a required logic function in response to writing state for a non-volatile storage element capable of being written electrically, and a logical operation control block which makes the logical function block perform the logical operation, and further a non-volatile memory block including a non-volatile storage element which into which an operation program can be electrically written, if necessary, all blocks being formed on one semiconductor substrate, when a data processing system is developed, in response to the function required for the system, a step of writing a required data in the logic circuit block or a step of writing a required software program in the non-volatile memory block is executed, thereby the function setting of the semiconductor integrated circuit for data processing can be performed rapidly and simply in response to the required specification of the system, and change of the function can be flexibly dealt with.

(2) Since various sorts of peripheral functions are apt to be on-chip to a semiconductor integrated circuit for data processing being a key component of the data processing system in recent years, it is expected that circuit parts as object of change of the operation specification and the function in the data processing system are more included in the semiconductor integrated circuit for data processing. In such circumstances, step of writing to the logic circuit block as the programmable logic structure incorporated in the semiconductor integrated circuit for data processing is executed and change of the operation specification and the function of the system is dealt with, thereby change portion to LSI or a circuit installed at the outside of the semiconductor integrated circuit for data processing becomes relatively little thereby this contributes significantly to decrease of the development time of the data processing system and reduction of the cost.

(3) In the semiconductor integrated circuit for data processing composed of the logical function block, and the logical operation control block, and further the non-volatile memory block, if necessary, all blocks being formed on one semiconductor substrate, the operation specification to enable writing to the logic function block or the non-volatile storage element of the non-volatile memory block from the outside by the writing device such as a general EPROM writer is provided, thereby when required data is written in the non-volatile storage element included in the semiconductor integrated circuit for data processing, a special exclusive device need not be prepared but the writing device such as a general EPROM can be utilized and the writing and the test reading can be performed. Consequently, at the debug or the development of the system applying the semiconductor integrated circuit for data processing, and further at the mass production, the use convenience to the semiconductor integrated circuit for data processing can be improved in the point of the writing processing to the non-volatile storage element included in the semiconductor integrated circuit for data processing.

(4) In the operation specification of enabling the writing to the logical function block and the non-volatile storage element of the non-volatile memory block from the outside using the writing device such as a general EPROM writer, the semiconductor integrated circuit for data processing can appear, by way of a mode signal, in function, similar to the non-volatile single memory such as EPROM. That is, for the writing device such as a general EPROM writer, an external terminal to be interfaced therewith is specified, thereby using an adapter such as a socket adapter with simple constitution to change difference between the semiconductor integrated circuit for data processing and the general writing device in the number and the arrangement constitution of the external terminals, both can be interfaced and the use convenience of the semiconductor integrated circuit for data processing can be further improved regarding the writing processing to the non-volatile storage element.

(5) The logical function block and the non-volatile memory block are commonly connected to the internal address bus and the internal data bus, or access terminal of data or address to be interfaced with the writing device is made common for the logical function block and the non-volatile memory block, and both are arranged in the same address space. Thereby when the logical function block and the non-volatile memory block are written in the writing device from the outside, special processing or circuit is not required for changing the address space, but by only changing the address signal, the writing of information becomes possible by the common writing device to both the logical function block and the non-volatile memory block. The use convenience is improved also in this point.

The invention by the present inventors has been specifically described based on the embodiments. However, the invention is not limited to the embodiments and various changes may be made without departing from the scope of the invention.

For example, in the embodiment, as the operation specification of the single chip microcomputer to enable the writing to the logical function block or the non-volatile memory block from the outside using the writing device such as a general EPROM writer, by the mode signal such as the external signal 513 the single chip microcomputer is specified to appear similar to the single EPROM. However, the invention is not limited to such operation specification, but a control circuit with communication means or interface means may be interposed between the single chip microcomputer and the general EPROM writer, and various sorts of information required for the writing and outputted from the general EPROM writer are supplied through the interface means to a rerquired I/O of the single chip microcomoputer, and the incoporated CPU performs required control operation according to the information supplied in this manner and the writing becomes possible. In this case, the writing operation command to the CPU may be included in part of the address signal outputted from the general EPROM writer.

Also in the embodiment, the logical function block and the non-volatile memory block are commonly connected to the internal address bus and the internal data bus, but the logical function block in its function needs not always be connected to the internal address bus and the internal data bus. When it is not connected to the internal address bus and the internal data bus, exclusive transmission path of data and address for verifying may be provided between the non-volatile storage element of the logical function block and the external terminal.

The logical function block and the non-volatile memory block are not limited to the arrangement in the same address space being linear but may be arranged in different spaces. In this case, when the writing or the test reading is performed to the logical function block or the non-volatile memory block from the outside, changing control of spaces is required. In such space changing, the space changing signal may be supplied by a simple switch on the adapter to a terminal allocated for such changing in exclusive or prescribed operation mode.

Constitution of the logical function block to realize required logical function in response to the writing state of the non-volatile storage element capable of being written electrically, and constitution of the non-volatile memory block to store software program, and constitution of the non-volatile storage element capable of being written and included therein, and the processing content to writing data to those members are not limited to the embodiment but may be suitably changed.

The semiconductor integrated circuit for data processing such as a single chip microcomputer including a non-volatile storage element capable of being written electrically is not limited to be enclosed in a package with a window to enable erasing of information by irradiating ultraviolet rays, since writing of only one time per chip is intended. In this case, single chip microcomputers having the entirely same structure are used and new information is written therein and installed on the system, thereby change of the operation specification and the function at the midway of the development of the system can be dealt with by the single chip microcomputer with the same structure.

In the above description, the invention made by the inventors is mainly applied in the single chip microcomuter as the background technical field and development to the printer controller including this. However, the invention is not limited to this, but can be applied to various sorts of the semiconductor integrated circuits for dataprocessing and development of various sorts of data processing systems.

## Claims

1. A method of developing a data processing system while using a plurality of semiconductor integrated circuit devices (1) each including on a single chip:

a central processing unit (2, 5),
an interface circuit (7) connected to external terminals of the integrated circuit device,
an internal bus (8) coupled to the central processing unit and to the interface circuit, and
a sub-processor (100) coupled to the internal bus and including:
non-volatile memory elements (101) for storing instructions,
an arithmetic logic unit (107), and
a control circuit (102) for generating in accordance with said instructions control signals controlling said arithmetic logic unit and said interface circuit,
said semiconductor integrated circuit devices (1) having a first operation mode allowing data to be written into the non-volatile memory elements (101) and a second operation mode for carrying out data processing for said data processing system by said central processing unit (2, 5) and said sub-processor (100) wherein direct access to the non-volatile memory elements by the central processing unit is inhibited in the second operation mode,

and wherein the method comprises the following steps:

(a) preparing a first one of said semiconductor integrated circuit devices (1),
(b) setting the first semiconductor integrated circuit device into the first operation mode and writing instructions into its non-volatile memory elements (101),
(c) operating the first semiconductor integrated circuit device in the second operation mode and checking whether the data processing system including the first semiconductor integrated circuit device executes a required function,
(d) preparing a further one of said semiconductor integrated circuit devices (1) if the data processing system does not execute the required function,
(e) setting the further semiconductor integrated circuit device into the first operation mode and writing instructions into its non-volatile memory elements (101),
(f) operating the further semiconductor integrated circuit device in the second operation mode and checking whether the data processing system including the further semiconductor integrated circuit device executes the required function,
(g) repeating steps (d) to (f) if the required function is not executed in step (f), and
(h) finishing development of the data processing system if the required function is executed in step (c) or (f).

2. A method according to claim 1, wherein, in steps (b) and (e) an external writing device (1200) is coupled to the internal bus of the respective semiconductor integrated circuit device operating in the first operation mode.

3. A method according to claim 2, wherein the external writing device (1200) reads data from the non-volatile memory elements after steps (b) and (e) to verify the correctness of the data stored therein.

4. A method according to claim 3, wherein the internal bus (8) includes an internal address bus (41) and an internal data bus (42) and

the second operation mode includes
an external read mode where an address signal from the central processing unit (2) is output by the semiconductor integrated circuit device via the internal address bus and external data is input into the semiconductor integrated circuit device to the internal data bus, and

an external write mode where an address signal and a data signal from the central processing unit are output by the semiconductor integrated circuit device via the internal address bus and the internal data bus, respectively.

## Patentansprüche

1. Verfahren zur Entwicklung eines Datenverarbeitungssystems unter Verwendung mehrerer integrierter Halbleiterschaltungen (1), die jeweils auf einem einzigen Chip folgendes beinhalten:

eine zentrale Verarbeitungseinheit (2, 5), eine mit Außenanschlüssen der integrierten Schaltung verbundene Interfaceschaltung (7), einen mit der Interfaceschaltung und der zentralen Verarbeitungseinheit verbundenen internen Bus (8), und einen mit dem internen Bus verbundenen Subprozessor (100), aufweisend: nichtflüchtige Speicherelemente (101) zur Speicherung von Befehlen, eine arithmetische logische Einheit (107), und eine Steuerschaltung (102), um entsprechend den Befehlen Steuersignale zu erzeugen, die die arithmetische logische Einheit und die Interfaceschaltung steuern, wobei die integrierten Halbleiterschaltungen (1) einen ersten Betriebsmodus, der es erlaubt, Daten in die nichtflüchtigen Speicherelemente (101) zu schreiben, und einen zweiten Betriebsmodus zur Ausführung einer Datenverarbeitung für das Datenverarbeitungssystem mittels der zentralen Verarbeitungseinheit (2, 5) und des Subprozessors (100) aufweisen, wobei in dem zweiten Betriebsmodus ein direkter Zugriff durch die zentrale Verarbeitungseinheit auf die nichtflüchtigen Speicherelemente gesperrt ist, und wobei das Verfahren die folgenden Schritte aufweist:

(a) Vorbereiten einer ersten der integrierten Halbleiterschaltungen (1),
(b) Setzen der ersten integrierten Halbleiterschaltung in den ersten Betriebsmodus und Einschreiben von Befehlen in seine nichtflüchtigen Speicherelemente (101),
(c) Betreiben der ersten integrierten Halbleiterschaltung in dem zweiten Betriebsmodus und Prüfen, ob das Datenverarbeitungssystem mit der ersten integrierten Halbleiterschaltung eine geforderte Funktion erfüllt,
(d) Vorbereiten einer weiteren der integrierten Halbleiterschaltungen (1), wenn das Datenverarbeitungssystem die geforderte Funktion nicht erfüllt,
(e) Setzen der weiteren integrierten Halbleiterschaltung in den ersten Betriebsmodus und Schreiben von Instruktionen in seine nichtflüchtigen Speicherelemente (101),
(f) Betreiben der weiteren integrierten Halbleiterschaltung in dem zweiten Betriebsmodus und Prüfen, ob das Datenverarbeitungssystem mit der weiteren integrierten Halbleiterschaltung die geforderte Funktion erfüllt,
(g) Wiederholen der Schritte (d) bis (f), wenn die geforderte Funktion in Schritt (f) nicht erfüllt wird, und
(h) Beenden der Entwicklung des Datenverarbeitungssystems, wenn die geforderte Funktion in Schritt (c) oder (f) erfüllt wird.

2. Verfahren nach Anspruch 1, wobei in den Schritten (b) und (e) ein externes Schreibgerät (1200) mit dem internen Bus der in dem ersten Betriebsmodus arbeitenden entsprechenden integrierten Halbleiterschaltung verbunden wird.

3. Verfahren nach Anspruch 2, wobei das externe Schreibgerät (1200) nach den Schritten (b) und (e) Daten aus den nichtflüchtigen Speicherelementen liest, um die Richtigkeit der darin gespeicherten Daten zu überprüfen.

4. Verfahren nach Anspruch 3, wobei der interne Bus (8) einen internen Adressenbus (41) und einen internen Datenbus (42) umfaßt und

der zweite Betriebsmodus beinhaltet:
einen externen Lesemodus, bei dem ein Adressensignal der zentralen Verarbeitungseinheit (2) über den internen Adressenbus von der integrierten Halbleiterschaltung ausgegeben und externe Daten in die integrierte Halbleiterschaltung hinein an den internen Datenbus gegeben werden und
einen externen Schreibmodus, in dem ein Adressensignal und ein Datensignal der zentralen Verarbeitungseinheit entsprechenderweise über den internen Adressenbus und den internen Datenbus von der integrierten Halbleiterschaltung ausgegeben werden.

## Revendications

1. Procédé de développement d'un système de traitement de données en utilisant une pluralité de dispositifs à circuit intégré à semi-conducteurs (1) comportant chacun, sur une seule puce :

une unité centrale de traitement (2, 5),
un circuit d'interface (7) relié aux bornes externes du dispositif à circuit intégré,
un bus interne (8) couplé à l'unité centrale de traitement et au circuit d'interface, et
un sous-processeur (100) couplé au bus interne et comportant :
des éléments de mémoire non-volatile (101) pour mémoriser des instructions,
une unité arithmétique et logique (107), et
un circuit de commande (102) pour produire, en fonction desdites instructions, des signaux de commande commandant ladite unité arithmétique et logique et ledit circuit d'interface,
lesdits dispositifs à circuit intégré à semi-conducteurs (1) ayant un premier mode de fonctionnement autorisant l'écriture de données dans les éléments de mémoire non-volatile (101) et un second mode de fonctionnement adapté pour que le traitement des données, pour ledit système de traitement de données, soit effectué par ladite unité centrale de traitement (2, 5) et ledit sous-processeur (100), un accès direct aux éléments de mémoire non-volatile à partir de l'unité centrale de traitement étant inhibé dans le second mode de fonctionnement,

le procédé comportant de plus les étapes consistant à :

(a) préparer un premier desdits dispositifs à circuit intégré à semi-conducteurs (1),
(b) établir le premier dispositif à circuit intégré à semi-conducteurs dans le premier mode de fonctionnement et écrire des instructions dans ses éléments de mémoire non-volatile (101),
(c) faire fonctionner le premier dispositif à circuit intégré à semi-conducteurs dans le second mode de fonctionnement et vérifier si le système de traitement de données comportant le premier dispositif à circuit intégré à semi-conducteurs exécute une fonction requise,
(d) préparer un dispositif supplémentaire parmi lesdits dispositifs à circuit intégré à semi-conducteurs (1) si le système de traitement de données n'exécute pas la fonction requise,
(e) établir le dispositif à circuit intégré à semi-conducteurs supplémentaire dans le premier mode de fonctionnement et écrire des instructions dans ses éléments de mémoire non-volatile (101),
(f) faire fonctionner le dispositif à circuit intégré à semi-conducteurs supplémentaire dans le second mode de fonctionnement et vérifier si le système de traitement de données comportant le dispositif à circuit intégré à semi-conducteurs supplémentaire exécute la fonction requise,
(g) répéter les étapes (d) à (f) si la fonction requise n'est pas exécutée à l'étape (f), et
(h) cesser de développer le système de traitement de données si la fonction requise est exécutée à l'étape (c) ou (f).

2. Procédé selon la revendication 1, dans lequel, aux étapes (b) et (e), un dispositif d'écriture externe (1200) est couplé au bus interne du dispositif à circuit intégré à semi-conducteurs respectif fonctionnant dans le premier mode de fonctionnement.

3. Procédé selon la revendication 2, dans lequel le dispositif d'écriture externe (1200) extrait des données des éléments de mémoire non-volatile après les étapes (b) et (e) pour vérifier la validité des données mémorisées dans ceux-ci.

4. Procédé selon la revendication 3, dans lequel le bus interne (8) comporte un bus d'adresses interne (41) et un bus de données interne (42) et

le second mode de fonctionnement inclut
un mode de lecture externe dans lequel un signal d'adresse provenant de l'unité centrale de traitement (2) est délivré en sortie par le dispositif à circuit intégré à semi-conducteurs via le bus d'adresses interne et des données externes sont envoyées en entrée dans le dispositif à circuit intégré à semi-conducteurs sur le bus de données interne, et
un mode d'écriture externe dans lequel un signal d'adresse et un signal de données provenant de l'unité centrale de traitement sont délivrés en sortie par le dispositif à circuit intégré à semi-conducteurs via le bus d'adresses interne et le bus de données interne, respectivement.

# FIG. 1

**SINGLE CHIP MICROCOMPUTER (1)**

- 1102 LOGICAL OPERATION CONTROL BLOCK
- 1101 LOGICAL FUNCTION BLOCK
- 1103 NON-VOLATILE MEMORY BLOCK

# FIG. 2

- SOCKET PORTION 1201
- 1200 GENERAL EPROM WRITER
- 1203 DISPLAY PORTION
- 1202 KEYBOARD PORTION
- 1206 CASING
- 1204 POWER SUPPLY CONNECTOR PORTION
- 1205 CONNECTOR PORTION FOR EXTERNAL EXTENSION

# FIG. 3

DEVELOPMENT START

S1 — SPECIFICATION DEFINITION

S2 — FUNCTION DEFINITION

S6 — EXCHANGE OF SINGLE CHIP MICROCOMPUTER

S3 — WRITING

- WRITING DATA TO LOGICAL FUNCTION BLOCK
- WRITING OPERATION PROGRAM TO NON-VOLATILE MEMORY BLOCK

S4 — FUNCTION CHECK

JUDGING — NG / OK

DEVELOPMENT END

# FIG. 4

PRINTER CONTROLLER SYSTEM 1000

CENTRONICS INTERFACE

SERIAL INTERFACE

SINGLE CHIP MICROCOMPUTER 1

HEAD DRIVER 1001

MOTOR DRIVER FOR CARRIAGE RETURN 1002

MOTOR DRIVER FOR LINE FEED 1003

POSITION DETECTION SIGNAL

INPUT FROM PANEL SWITCH

CONTROL OUTPUT FOR PANEL DISPLAY

# FIG. 5

1

PROCESSOR 5

CPU 2

RAM 3

ROM 4

10  8

PLA 6

9

I/O 7

# FIG. 6

PROCESSOR — 5

— 1

— 6

PLA

ADDRESS BUS **8b**

CONTROL SIGNAL LINE **8a**

DATA BUS **8c**

INPUT LATCH — 23

AND MATRIX — 20

OR MATRIX — 21

OUTPUT LATCH — 22

22b

22a

70c

9c

SELECTOR — 24

9b

9a

I/O   7c

I/O   7b

I/O   7a

FIG. 7

FIG. 9A

FIG. 9B

FIG. 9C

FIG. 9D

FIG. 8

FIG. 10

# FIG. 11

## FIG. 12

# FIG. 13

## FIG. 14

# FIG. 15

| | |
|---|---|
| 0000H | ADDRESS AREA ASSIGNED BY NON-VOLATILE MEMORY BLOCK 4 |
| 3FFFH | |
| 4000H | ADDRESS AREA ASSIGNED BY PROGRAMMABLE LOGIC CKT 900 |
| 7FFFH | |

# FIG. 16

(A) Vcc

(B) ADDRESS SIGNAL

(C) DATA

(D) $\overline{OE}$

(E) $\overline{CE}$

(F) Vpp
(G) Vcc

WRITING  TEST READING

# FIG. 17

1 SINGLE CHIP MICROCOMPUTER

P513
P5121
P5122
P516
Pmvcc

P578

P519

1210 ADAPTER

1200 GENERAL EPROM WRITER

Vpp / Vcc

$\overline{OE}$

Pwvcc
Pce

$\overline{CE}$

Padrs
Poe Pvpp
Vcc

Pdata

1201 SOCKET PORTION

30

FIG. 18

FIG. 19

EP 0 364 743 B1

# FIG. 20